# EUROPEAN PATENT SPECIFICATION

(11) **EP 2 283 464 B1**
(45) Date of publication and mention of the grant of the patent: **21.01.2015**
(21) Application number: 09750224.9
(22) Date of filing: 13.05.2009
(51) Int. Cl.: G06T 11/00

(54) **METHOD AND APPARATUS FOR SCATTER CORRECTION**
VERFAHREN UND VORRICHTUNG ZUR STREUUNGSKORREKTUR
PROCÉDÉ ET APPAREIL DE CORRECTION DE LA DIFFUSION

(30) Priority: 21.05.2008 US 54825
(43) Date of publication of application: 16.02.2011
(73) Proprietor: Koninklijke Philips N.V., 5656 AE Eindhoven (NL); Philips Intellectual Property & Standards GmbH, 20099 Hamburg (DE)
(72) Inventor: BERTRAM, Matthias, Cleveland Ohio 44143 (US); WIEGERT, Jens, Cleveland Ohio 44143 (US); HOHMANN, Steffen, Gunther, Cleveland Ohio 44143 (US)
(74) Representative: van Velzen, Maaike Mathilde
(86) International application number: PCT/IB2009/051988
(87) International publication number: WO 2009/141767

(56) References cited:
- EP-A1- 1 566 771
- US-A1- 2007 269 001
- SIEWERDSEN J ET AL: "A simple, direct method for x-ray scatter estimation and correction in digital radiography and cone-beam CT" MEDICAL PHYSICS, AIP, MELVILLE, NY, US, vol. 33, no. 1, 27 December 2005 (2005-12-27), pages 187-197, XP012091850 ISSN: 0094-2405
- WERLING A ET AL: "Fast implementation of the single scatter simulation algorithm and its use in iterative image reconstruction of PET data" PHYSICS IN MEDICINE AND BIOLOGY, TAYLOR AND FRANCIS LTD. LONDON, GB, vol. 47, no. 16, 1 August 2002 (2002-08-01), pages 2947-2960, XP002318421 ISSN: 0031-9155

## Description

The present application relates generally to the imaging arts and more particularly to an apparatus and method for scattered photon correction. It finds use in X-ray imaging (using X-ray photons), Computer Tomography or CT imaging (using X-ray photons), and other kinds of systems such as image-guided radiation therapy systems.

Such imaging processes generally include a radiation source which produces imaging photons. The photons pass through the imaged subject to be collected or counted by a photon detector. Data generated by the photon detector is then electronically processed to generate an image of the subject. Two types of photons reach the photon detector. The first are "primary" photons, which are generated by the photon source and travel on a straight line path through the imaged subject to reach the photon detector. The second are "scattered" photons, including photons which are generated by the photon source but which get redirected off of a straight line path during their travel to the photon detector, and also including extraneous background photons which were not actually generated by the photon source. Scattered photons can introduce error into the image reconstruction process. Therefore, to generate highly accurate images of the subject, data generated by the photon detector as a result of scattered photons is typically discounted or corrected for during the image reconstruction process.

EP 1 566 771 A1 discloses a method of correcting scatter, wherein a voxellized representation of a three-dimensional image of an object is obtained from a plurality of projection data and a single scatter profile for the object is calculated using the voxellized representation of the three-dimensional image of the object. The total scatter profile for the object is determined using the single scatter profile and an adjustment factor. The projection data are corrected using the total scatter profile to obtain scatter corrected projection data.

US 2007/0269001 A1 discloses an X-ray diagnostic device for an examination on a patient seated or standing. An X-ray emitter is arranged on a mounting device movable on a circular path, and a flat-panel image detector is situated opposite to the X-ray emitter and arranged on the mounting device. An adjustment device adjusts the height of the X-ray emitter and of the image detector, and a digital imaging system records a projection image based upon rotation angiography. The projection image is reconstructed into a three-dimensional volume image by using an image processing device, wherein a correction device corrects physical effects or artifacts for representing soft tissue in the projection image and the three-dimensional volume image.

The article "A simple, direct method for x-ray scatter estimation and correction in digital radiography and cone-beam CT" by J. H. Siewerdsen et al., Medical Physics, vol. 33, no 1, pages 187 - 197 (January 2006) discloses a method for X-ray scatter estimation and correction in digital radiography and cone-beam computed tomography. Scatter fluence is estimated directly in each projection from pixel values near the edge of a detector behind collimator leaves. The corresponding algorithm operates on the assumption that the signal and the collimator shadow is attributable to X-ray scatter, and the two-dimensional scatter fluence is estimated by interpolating between pixel values measured along top and bottom edges of the detector behind the collimator leaves. The resulting scatter fluence estimate is subtracted from each projection to yield an estimate of primary-only images.

The article "Fast implementation of the single scatter simulation algorithm and its use in iterative image reconstruction of PET data" by A. Werling et al., Physics in Medicine and Biology, vol. 47, no. 16, pages 2947-2960 (1 August 2002) discloses a single scatter simulation algorithm and its use in iterative image reconstruction of positron emission tomography data. An optimized implementation of a single scatter simulation algorithm is used, wherein the scatter simulation is included in a forward projection step of a maximum likelihood image reconstruction.

According to one aspect of the present invention, a method and apparatus are provided for improved photon scatter correction as defined in claims 1 and 7, respectively.

According to a particular aspect of the present invention, an imaging method is provided. A direct physical measurement of scattered photons, as well as a model of the photon scattering process, are used in conjunction during image reconstruction to correct for photon scatter in generating an image. This method may additionally provide a correction for low frequency drop.

According to another aspect of the present invention, an imaging apparatus is provided. The imaging apparatus has a photon source and a photon detector. The photon detector has two regions. A first, imaging region of the photon detector receives photons traveling along flight paths leading on a straight line path back to the photon source. A second, scatter region of the photon detector is closed to such photons by a shutter, but is open to other photons. The measurement of scattered photons received by the second scatter region of the photon detector may then be used in conjunction with a model of the photon scattering process during image reconstruction to correct for scattered photons in the imaging data collected from the first, imaging region of the photon detector.

One advantage resides in a more accurate and robust scatter correction, reducing the risk of visible scatter artifacts appearing in images. Another advantage resides in producing more useful X-ray, CT or other images. Numerous additional advantages and benefits will become apparent to those of ordinary skill in the art upon reading the following detailed description of preferred embodiments.

The invention may take form in various components and arrangements of components, and in various process operations and arrangements of process operations. The drawings are only for the purpose of illustrating preferred embodiments and are not to be construed as limiting the invention.
FIGURE 1 is a schematic representation of an imaging system;
FIGURE 2 schematically illustrates the X-ray detector and shutter used in the imaging system of FIGURE 1;
FIGURE 3 schematically illustrates an alternative X-ray detector and shutter combination;
FIGURE 4 illustrates a process to correct for scattered photons in generating images;
FIGURES 5A to 5D are representative images which may be used in association with the process of FIGURE 4.

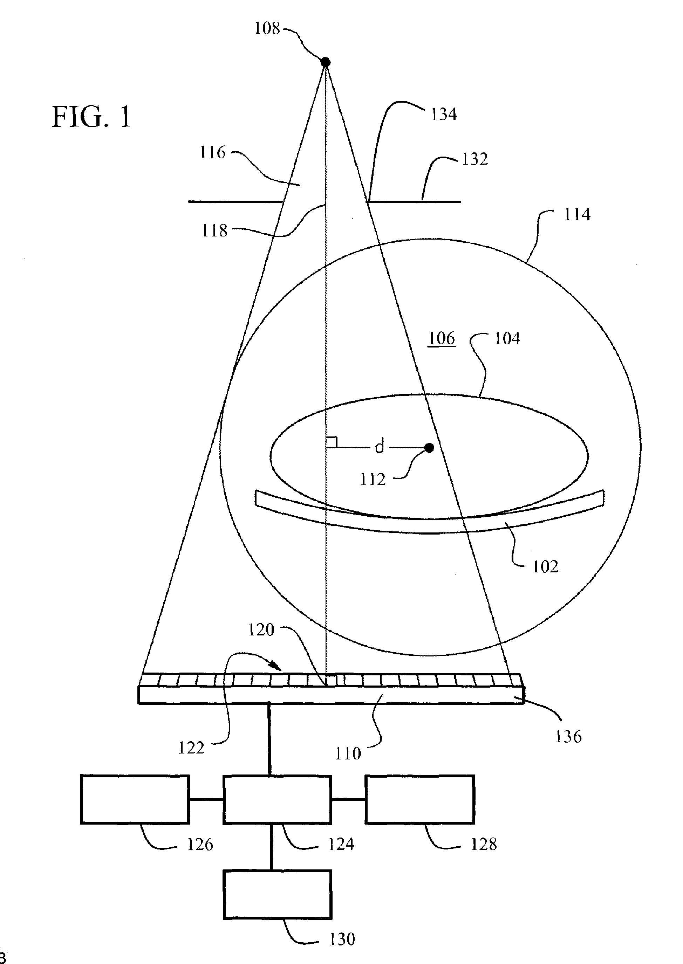

The imaging method and apparatus of the present application are directed generally to any imaging system which corrects for scattered photons. One example of such an apparatus is the imaging system 100 shown in FIGURE 1, which is particularly useful in generating CT images. As already mentioned, the imaging method and apparatus disclosed here have application in various other kinds of imaging systems.

As illustrated in FIGURE 1, a couch or other suitable object support 102 supports an object under examination 104 in an examination region 106. An X-ray source 108 such as an X-ray tube, and an X-ray detector 110 such as a flat panel area detector, are provided. The X-ray source 108 and X-ray detector 110 are mounted on a common rotating gantry (not shown) having a center of rotation 112. The X-ray source 108 and X-ray detector 110 together rotate with the gantry around the support 102 and the imaged subject 104. In that way, imaging measurements may be taken of the transverse field of view (FOV) 114, the center of which corresponds to the center of rotation 112. The X-ray beam 116 generated by the X-ray source 108 has a central ray or projection 118 which is perpendicular to the transverse center 120 of the X-ray detector 110 and is displaced from the center of rotation 112 by a distance d. If d is greater than 0, as shown for example in FIGURE 1, then the X-ray detector 110 is in an "offset" configuration. If d equals 0, then the central ray 118 passes through the center of rotation 112, and the X-ray detector 110 is in a "central" configuration.

A collimator 122 is mounted proximate to the X-ray detector 110, between the detector 110 and the examination region 106, to reduce the amount of scattered photons received by the detector 110. In general, collimators operate to filter the streams of incoming photons so that only photons traveling in a specified direction are allowed through the collimator. Which direction(s) are permitted through which portion(s) of the collimator is determined in accordance with the data type being collected (for example, whether the X-ray source 108 or other photon source is configured to produce a parallel beam, fan beam, and/or cone beam). The collimator 122 shown in FIGURE 1 includes a plurality of lamellae focused on the X-ray source 108. If the X-ray source 108 is a line source extending generally parallel to the rotation axis 112, then the X-ray beam 116 will be a "fan beam." In that event, the lamellae of the collimator 122 will be transversely symmetric with respect to the transverse center 120 of the detector 110. If the X-ray source 108 is a point source, then the X-ray beam 116 will be a "cone beam." In that event, the lamellae of the collimator 122 will vary in both the transverse and axial directions to point back to the point source.

The X-ray detector 110 may include, for example, a scintillator that emits a secondary flash of light or photons in response to the incident X-ray photons 116, or optionally can be a solid state direct conversion material (e.g. CZT). In the former instance, an array of photomultiplier tubes or other suitable photodetectors in the detector 110 receives the secondary light and converts it into electrical signals. The X-ray detector 110 records multiple two dimensional images (also called projections) at different points around the imaged subject 104. That X-ray projection data is stored by an imaging data processor 124 in a memory 126. Once all the X-ray projection data is gathered, it may be electronically processed by the imaging data processor 124. The processor 124 generates an image of the subject 104, according to a mathematical algorithm or algorithms, which can be displayed on an associated display 128. A user input 130 may be provided for a user to control the processor 124.

The aforementioned functions can be performed as software logic. "Logic," as used herein, includes but is not limited to hardware, firmware, software and/or combinations of each to perform a function(s) or an action(s), and/or to cause a function or action from another component. For example, based on a desired application or needs, logic may include a software controlled microprocessor, discrete logic such as an application specific integrated circuit (ASIC), or other programmed logic device. Logic may also be fully embodied as software.

"Software," as used herein, includes but is not limited to one or more computer readable and/or executable instructions that cause a computer or other electronic device to perform functions, actions, and/or behave in a desired manner. The instructions may be embodied in various forms such as routines, algorithms, modules or programs including separate applications or code from dynamically linked libraries. Software may also be implemented in various forms such as a stand-alone program, a function call, a servlet, an applet, instructions stored in a memory such as memory 126, part of an operating system or other type of executable instructions. It will be appreciated by one of ordinary skill in the art that the form of software is dependent on, for example, requirements of a desired application, the environment it runs on, and/or the desires of a designer/programmer or the like.

The systems and methods described herein can be implemented on a variety of platforms including, for example, networked control systems and stand-alone control systems. Additionally, the logic, databases or tables shown and described herein preferably reside in or on a computer readable medium such as the memory 126. Examples of different computer readable media include Flash Memory, Read-Only Memory (ROM), Random-Access Memory (RAM), programmable read-only memory (PROM), electrically programmable read-only memory (EPROM), electrically erasable programmable read-only memory (EEPROM), magnetic disk or tape, optically readable mediums including CD-ROM and DVD-ROM, and others. Still further, the processes and logic described herein can be merged into one large process flow or divided into many sub-process flows. The order in which the process flows herein have been described is not critical and can be rearranged while still accomplishing the same results. Indeed, the process flows described herein may be rearranged, consolidated, and/or re-organized in their implementation as warranted or desired.

As already discussed, the collected projection data generally contains inaccuracies caused by scattered X-rays. The imaging system 100 geometry shown in FIGURE 1 can be highly susceptible to X-ray scattering, for at least two reasons. First, the X-ray detector 110 is offset from the X-ray source 108 by a distance d which is greater than zero. Second, the X-ray source 108 emits X-rays in a cone-beam configuration. The X-ray scattering of such a configuration, and other configurations, may be corrected for as follows.

A mathematical algorithm is applied to the projection data collected by the X-ray detector 110 to correct for X-ray scatter and generate sufficiently accurate CT images. That mathematical algorithm applies a model of photon scattering. The model may be a physical model, based on assumptions or estimates regarding the physical space between the X-ray source 108 and the X-ray detector 110, including the subject 104. One such algorithm is disclosed in PCT Application Publication WO 2007/148263 entitled "Method and System for Error Compensation." Other algorithms may be used to correct for photon scatter, including the disclosures of:
- J. Wiegert, M. Bertram, G. Rose and T. Aach, "Model Based Scatter Correction for Cone-Beam Computed Tomography", Medical Imaging 2005: Physics of Medical Imaging, Proceedings of SPIE Vol. 5745 (2005), at 271-82;
- J. Wiegert, M. Bertram, D. Schäfer, N. Noordhoek, K. de Jong, T. Ach and G. Rose, "Soft Tissue Contrast Resolution Within the Head of Human Cadaver by Means of Flat Detector Based Cone-Beam CT", Medical Imaging 2004: Physics of Medical Imaging, Proceedings of SPIE Vol. 5368 (2004), at 330-37;
- M. Bertram, J. Wiegert and G. Rose, "Scatter Correction for Cone-Beam Computed Tomography Using Simulated Object Models", Medical Imaging 2006: Physics of Medical Imaging, Proceedings of SPIE Vol. 6142 (2006), at C-1 to C-12.
- L.A. Love and R. Kruger, "Scatter Estimation for a Digital Radiographic System Using Convolution Filtering", Med. Phys. Vol. 14, No. 2 (March/April 1987), at 178-85;
- B. Ohnesorge, T. Flohr and K. Klingenbeck-Regn, "Efficient Object Scatter Correction Algorithm for Third and Fourth Generation CT Scanners", Eur. Radiol. Vol. 9 (1999), at 563-69;
- M. Zellerhoff, B. Scholz, E.P. Rühmschopf and T. Brunner, "Low Contrast 3D-Reconstruction from C-Arm Data", Medical Imaging 2005: Physics of Medical Imaging, Proceedings of SPIE Vol. 5745 (2005), at 646-55;
- V. Hansen, W. Swindell and P. Evans, "Extraction of Primary Signal from EPIDs Using Only Forward Convolution", Med. Phys. Vol. 24, No. 2 (Sept. 1997), at 1477-84;
- J. Seibert and J. Boone, "X-Ray Scatter Removal by Deconvolution", Med. Phys. Vol. 15, No. 4 (July/Aug. 1988), at 567-75; and
- L. Spies, M. Ebert, B. Groh, B. Hesse and T. Bortfeld, "Correction of Scatter in Megavoltage Cone-Beam CT", Phys. Med. Biol. Vol. 46 (2001), at 821-33.

Such models and algorithms may be applied using the processor 124 and memory 126 described above.

Such scatter correction models and algorithms may be used in conjunction with a direct physical measurement of scattered photons. For example, as shown in FIGURE 1, a shutter mechanism 132 may be disposed between the X-ray source 108 and the examination subject 104. The shutter mechanism 132 operates to block the X-ray beam 116 except for an aperture 134 provided in the shutter mechanism 132. The size of the aperture 134 may be adjustable. In the configuration illustrated in FIGURE 1, the shutter mechanism 132 prevents the X-ray beam 116 from reaching a lateral border 136 of the X-ray detector 110. That border 136 is positioned approximately behind the center of the imaged subject 104 and near the center of rotation 112.

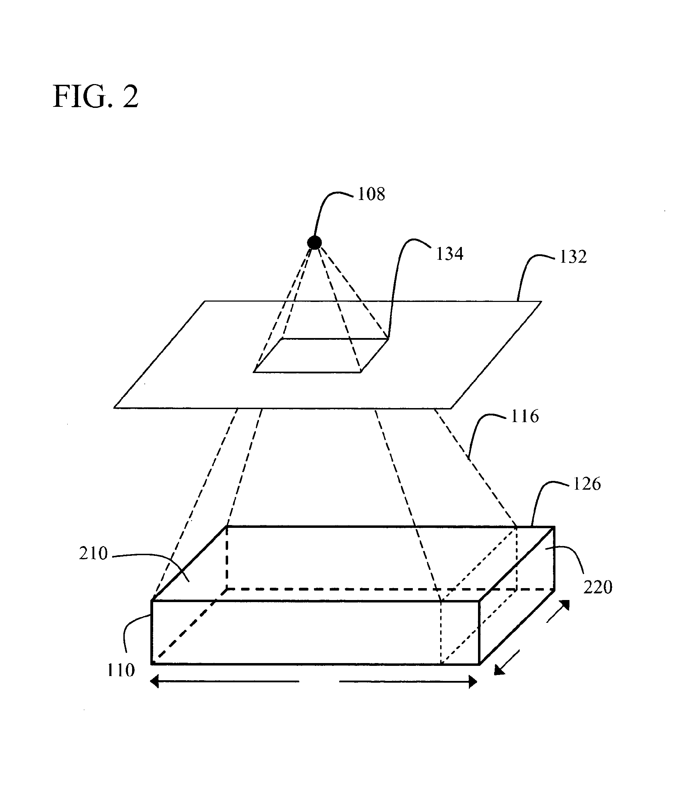

Turning now to FIGURE 2, the X-ray detector 110 of FIGURE 1 is shown with the shutter mechanism 132. The collimator 122 is not shown in FIGURE 2. The X-ray detector 110 is divided into two regions: an imaging region 210 and a scatter region 220. The imaging region 210 of the X-ray detector 110 corresponds to the aperture 134 in the shutter mechanism 132, so it receives photons traveling along flight paths leading on a straight line path back to the X-ray source 108. In other words, the imaging region 210 is open to primary photons as well as to scattered photons which approach the collimator 122 and detector 110 along the same flight paths as primary photons. The shutter mechanism 134 prevents the scatter region 220 of the X-ray detector 110 from receiving primary photons, but the scatter portion 220 is open to other photons. Thus, the scatter region 220 is open to scattered photons but not to primary photons.

There is not necessarily any difference in structure or operation of the X-ray detector 110 in the imaging region 210 and the scatter region 220. Rather, the imaging region 210 of the X-ray detector 110 will count primary photons as well as scattered photons which approach the X-ray detector 110 along the same flight path as primary photons. And the scattered region 220 of the X-ray detector 110 will count scattered photons, but not primary photons. Of course, alternatively the X-ray detector 110 may be two separate X-ray detectors with one in each region 210, 220.

As shown in FIGURE 2, the scatter region 220 of the X-ray detector 110 is one contiguous region of the detector 110, extending across the entire width W and a portion of the length L. When the detector 110 is placed in the imaging system 100, the scatter region 220 may be advantageously positioned approximately behind the center of the imaged subject 104 and near the center of rotation 112 along the lateral border 126, as illustrated in FIGURE 1.

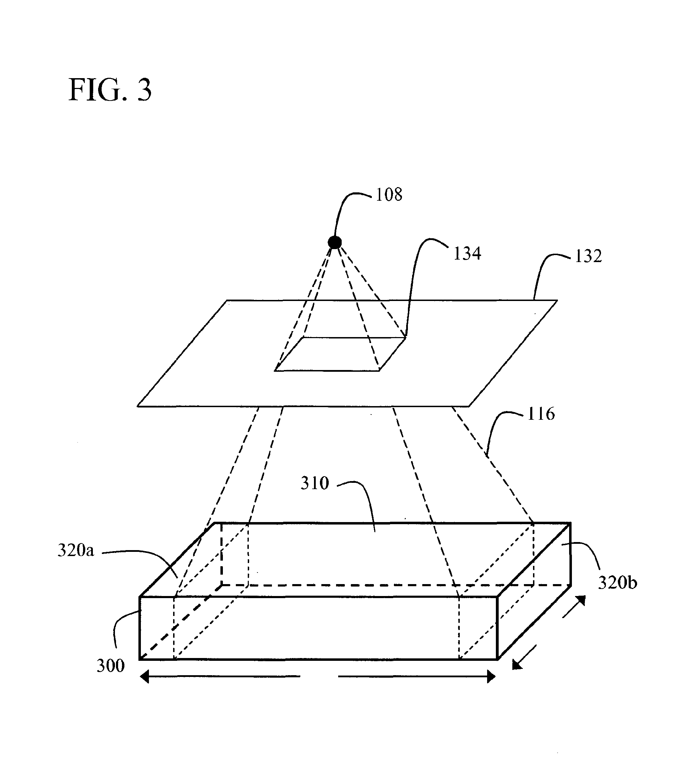

The scatter region of the X-ray detector need not be entirely contiguous like the representative scatter region 220 shown in FIGURE 2. For example, FIGURE 3 shows an X-ray detector 300 having an imaging region 310 and a scatter region 320 including two non-contiguous sub-portions 320a and 320b. The sub-portions 320a, 320b are disposed at opposing lateral borders of the detector 300. This configuration is especially useful for an X-ray detector 300 meant for use in a CT apparatus with a center detector arrangement, such as for example a C-arm arrangement. Any number of non-contiguous sub-portions may be used to form a scatter portion in a photon detector.

Yet other configurations are of course possible. The scatter region of the photon detector may be located along the entire border of the detector (e.g., all four sides of a rectangular detector). Or it may be a polka dot pattern, for example. The amount of overall detector area devoted to the scatter region should optionally be large enough to help compensate for low frequency drop or LFD (discussed further below) yet small enough to leave a sufficiently large area remaining for the imaging region to generate a useful image. It has been found that, in a rectangular detector 110 such as shown in FIGURE 2 wherein L equals about 38 cm and W equals about 29 cm, a scatter region 220 extending along the entire width and about 2 cm of the length is sufficient.

The direct physical measurement of scattered photons striking the scatter region of the photon detector may be used during image reconstruction to correct for scattered photons in the imaging data recorded in the imaging region of the photon detector. Generally, the scatter region of the photon detector collects substantially only scattered photons. The scatter region of the photon detector then generates an electronic signal reflecting only such scattered photons. The direct physical measurement of scattered photons may be used to estimate the contribution of scattered photons to other areas of the photon detector. That estimate may then be subtracted or divided from the signal produced by the photon detector in those areas to correct for scattered photons and generate a more accurate image.

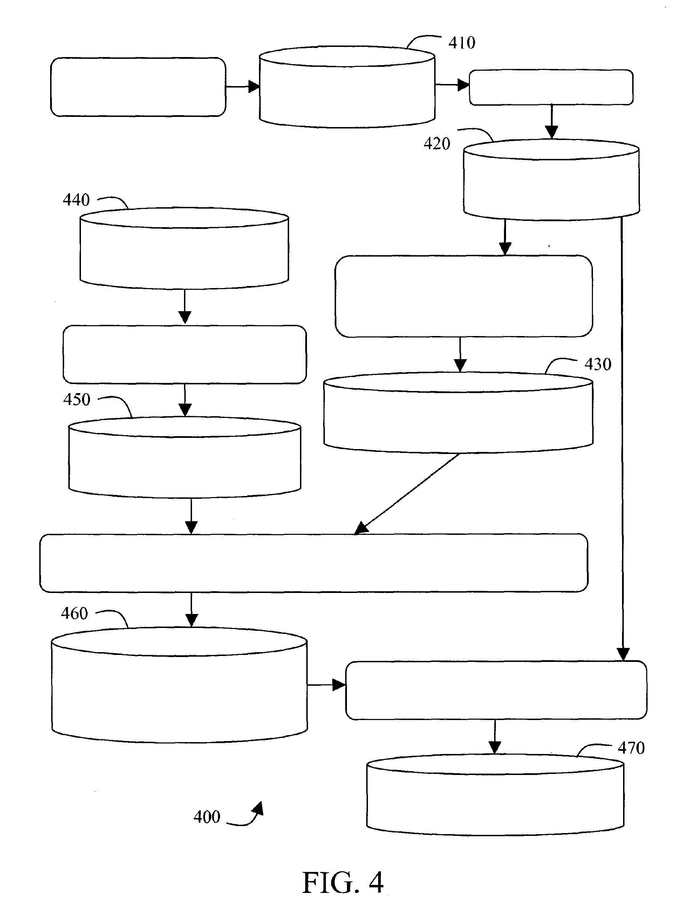

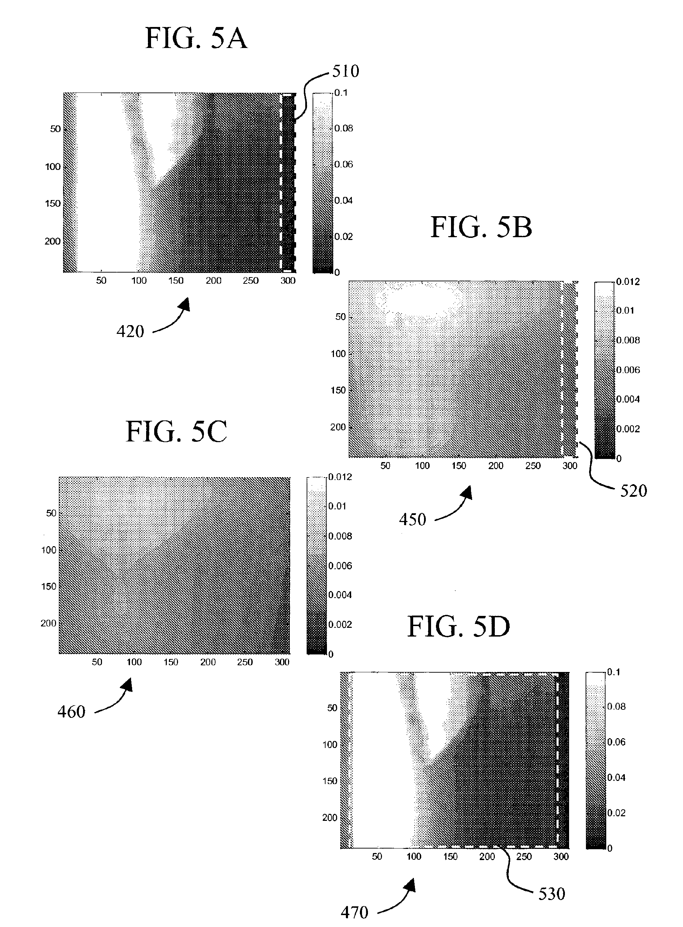

For example, such a process 400 is shown in FIGURES 4 and 5A to 5D. Initially, as shown in FIGURE 4, raw image data 410 is collected by rotating the X-ray source 108 and X-ray detector 110 with the collimator 122 around the imaged subject 104. The data 410 is a collection of several two-dimensional projection images recorded by the X-ray detector 110 at various imaging positions disposed around the subject 104. One of those projections is then selected to undergo the process 400 to correct the selected projection's imaging data 420 for scatter. Once all such projections have been corrected for scatter, the projections are then processed together as a whole to generate a final image.

Often, a single projection image 420 may initially be corrected for low frequency drop (LFD) within the X-ray detector 110 to obtain an LFD-corrected projection image 430. LFD results from photons scattering within the scintillator component of the X-ray detector 110. LFD can strongly falsify the signals recorded by the X-ray detector 110, especially portions of the detector nearby large incident X-ray intensity. Although LFD corrections may be made in the imaging region 210 and in the scatter region 220 of the X-ray detector 110, they are especially useful in the scatter region 220 due to the relatively low amounts of photons in that region 220. Thus, it is typically advantageous to place the scatter region 220 in an area of the X-ray detector 110 which is sufficiently far from areas with high incident X-ray intensity. Using the geometry shown in FIGURE 1, that condition is usually met for the lateral border 126 of the X-ray detector 110 positioned approximately behind the center of the imaged subject 104 and near the center of rotation 112. That border 126 is subject to a relatively low intensity of X-rays because it lies in the shadow of the object support 102 and/or the object 104. Thus, the X-ray detector 110 of FIGURE 2 is particularly useful in connection with the imaging system 100 of FIGURE 1 if the scatter region 220 lies along the border 126. Other configurations will be better suited for use in connection with other imaging system geometries. For example, the X-ray detector 300 of FIGURE 3 can be well suited for use in connection with a center detector arrangement such as for example a C-arm arrangement.

FIGURE 5A shows a representative projection image 420 or 430, taken using a CT system having the geometry of the system 100 and using a shutter 132 and X-ray detector 110. The dotted region 510 in the image 420 or 430 corresponds to the scatter region 220 of the X-ray detector 110 used to generate the image 420 or 430.

Once a raw image is selected 420, and LFD corrections have been made to that image (if desired), then a physical or empirical model of the photon scattering process 440 is employed. Representative examples of such a physical model are provided above. Such a physical model 440 advantageously covers at least a portion of the imaging region 210 and at least a portion of the scatter region 220 of the X-ray detector 110. Using the physical model 440, a scatter estimate 450 corresponding to the scatter region 220 is calculated for the projection 420 or 430. FIGURE 5B shows a representative example of such a scatter estimate 450, generated using the physical model of WO 2007/148263. The modeled scatter estimate 450 corresponding to the scatter region 220 for the selected projection 420 (e.g., dotted region 520 in FIGURE 5B) is then compared with the measured data 420 or 430 from the scatter region 220 for the selected projection 420 (e.g., dotted region 510 in FIGURE 5A).

Based on that comparison, the scatter model 440 is globally adjusted over the entire X-ray detector region 210 and 220 to obtain an updated physical scatter model 460. This adjustment is made in such a way that maximum correspondence is obtained in the scatter region 220 between the updated physical scatter model 460 and the measured data 420 or LFD-corrected data 430. This may be achieved, for example, by multiplying the initial scatter estimate 450 with a scaling factor that is chosen in such a way so as to minimize the root mean square difference between the scatter estimate 450 and the measured data 420 or 430 in the scatter region 220. The scaling factors may be weighted to rely more heavily on portions of the region 220 which are believed to be more accurate than other portions. FIGURE 5C shows a representative example of an updated scatter model 460, based on the same imaging data used to generate FIGURES 5A and 5B.

Once the improved scatter model 460 is calculated for a particular projection 420 or 430, that improved model 460 is applied to the imaging projection data 420 or 430 to correct for scattered photons and generate a scatter-corrected projection image 470. This correction may be carried out, for example, in a subtractive or a multiplicative manner. FIGURE 5D shows a representative example of such a scatter-corrected projection image 470. The dotted region 530 in the image 470 corresponds to the imaging region 210 of the X-ray detector 110. It is the scatter-corrected data corresponding to that region 210 which is later used by the image processor 124 to generate an image of the subject 104.

Once all the projections in the data acquisition have been adjusted according to the process 400 of FIGURE 4, the scatter-corrected projections 470 are reconstructed together to obtain a tomographic image of the scanned subject 104, as will be well understood by one of ordinary skill in this art.

While the present scatter correction technique is particularly useful in a cone-beam CT apparatus with an offset detector as shown in FIGURE 1, it has application in other contexts as well. For example, it may be employed to correct for scatter photons in a cone-beam CT apparatus with a centered detector, such as for example C-arms.

The invention has been described with reference to the preferred embodiments. Obviously, modifications and alterations will occur to others upon reading and understanding the preceding detailed description. It is intended that the invention be construed as including all such modifications and alterations insofar as they come within the scope of the appended claims or the equivalents thereof. The invention may take form in various components and arrangements of components, and in various steps and arrangements of steps. The drawings are only for purposes of illustrating the preferred embodiments and are not to be construed as limiting the invention.

## Claims

1. A method of correcting for photon scatter in an image, the method comprising:
using a photon source (108) to generate photons which pass through a subject (104) to be imaged;
using a photon detector (110) to record an image (420) of the subject (104), wherein the image (420) comprises a single scatter region (510) exposed substantially only to scatter photons and an imaging region (530) exposed to primary photons and scatter photons, wherein the photon detector (110) is in an offset configuration and the single scatter region (220) is disposed along a border of the photon detector (110) in the shadow of the subject (104);
correcting at least a portion of the image (420) for low frequency drop;
applying a model of a photon scattering process to produce an estimate (520) of the exposure of the single scatter region (510) to scatter photons;
comparing the single scatter region (510) of the image (420) with the estimate (520) of the exposure of the single scatter region (510) to scatter photons;
based at least in part on the comparison, modifying the model to generate an updated model of the photon scattering process; and
applying the updated model to the imaging region (530) of the image (420) to generate a scatter-corrected image (470).

2. The method of claim 1, wherein a shutter (132) is used to segregate the single scatter region (510) from the imaging region (530).

3. The method of claim 1, wherein at least the single scatter region (510) of the image (420) is corrected to compensate for low frequency drop.

4. The method of claim 1, the method comprising:
moving the photon detector (110) to multiple imaging positions around the subject (104) to record an image projection (420) as the image at each imaging position, wherein each image projection (420) comprises a single scatter region (510) exposed substantially only to scatter photons and an imaging region (530) exposed to primary photons and scatter photons;
wherein in the step of correcting, at least a portion of each image projection (420) is corrected for low frequency drop;
wherein in the step of applying the model, for each imaging position, the model of a photon scattering process is applied to produce an estimate (520) of the exposure of the single scatter region (510) to scatter photons;
wherein in the step of comparing, the single scatter region (510) of each image projection (420) is compared with the estimate (520) of the exposure of the single scatter region (510) to scatter photons; and
wherein in the step of applying the updated model, the updated model is applied to the imaging region (530) of each image projection (420) to generate a scatter-corrected image projection (470).

5. The method of claim 4, wherein a shutter (132) is used to segregate the single scatter region (510) from the imaging region (530) and wherein the shutter (132) is disposed between the photon source (108) and the subject (104).

6. The method of claim 4, wherein the model is a physical model based on assumptions or estimations regarding the physical space traversed by photons before they reach the photon detector (110).

7. An apparatus of correcting for photon scatter in an image, the apparatus comprising:
a photon source (108) for generating photons which pass through a subject (104) to be imaged;
a photon detector (110) for recording an image (420) of the subject (104), wherein the image comprises a single scatter region exposed substantially only to scatter photons and an imaging region exposed to primary photons and scatter photons, wherein the photon detector (110) is in an offset configuration and the single scatter region is disposed along a border of the photon detector (110) in the shadow of the subject (104); and
an image processor (124) which:
corrects at least a portion of the image (420) for low frequency drop;
applies a model of a photon scattering process to produce an estimate of the exposure of the single scatter region to scatter photons;
compares the single scatter region of the image (420) with the estimate of the exposure of the single scatter region to scatter photons;
based at least in part on the comparison, modifies the model to generate an updated model of the photon scattering process; and
applies the updated model to the imaging region (530) of the image (420) to generate a scatter-corrected image (470).

8. The apparatus of claim 7, wherein:
the photon source (108) is adapted for generating photons which pass through a subject (104) to be imaged in an imaging area (106);
the photon detector (110) is moveable between multiple imaging positions around the imaging area (106) to record an image projection (420) as the image at each imaging position, the photon detector (110) comprising a single scatter region (220) exposed substantially only to scatter photons to generate a scatter region signal representing the single scatter region of the image and an imaging region (210) exposed to primary photons and scatter photons to generate an imaging region signal representing the imaging region of the image; and
the image processor (124) is adapted to:
receive the scatter region signal from the photon detector (110);
correct at least a portion of the single scatter region signal or the imaging region signal for low frequency drop;
use the model of a photon scattering process to produce the scatter exposure estimate of the exposure of the scatter region (220) to scatter photons;
compare the single scatter region signal to the scatter exposure estimate;
based at least in part on the comparison, generate the updated model of the photon scattering process; and
apply the updated model to the imaging region signal to generate a scatter-corrected image projection;
wherein the apparatus further comprises a display (128) for a user to view images of the subject (104).

9. The apparatus of claim 8, wherein the model is a physical model based on assumptions or estimations regarding the physical space traversed by photons before they reach the photon detector (110).

10. A computer readable medium including one or more computer executable instructions for correcting an image (420) for photon scatter, the computer readable medium comprising:
logic for receiving an image signal from a photon detector (110), wherein the image signal comprises a scatter region signal from a single scatter region (220) of the photon detector (110) which is exposed substantially only to scatter photons, and an imaging region signal from an imaging region (210) of the photon detector (110) which is exposed to primary photons and scatter photons, wherein the photon detector (110) is in an offset configuration and the single scatter region (220) is disposed along a border of the photon detector (110) in the shadow of the subject (104);
logic for correcting at least a portion of the image signal for low frequency drop;
logic which applies a model of a photon scattering process to produce an estimate of the scatter region signal;
logic which compares the scatter region signal received from the photon detector (110) with the estimate of the scatter region signal;
logic which, based at least in part on the comparison, modifies the model to generate an updated model of the photon scattering process; and
logic which applies the updated model to the imaging region signal to generate a scatter-corrected image (470).

## Patentansprüche

1. Verfahren zum Korrigieren von Photonenstreuung in einem Bild, wobei das Verfahren Folgendes umfasst:
Verwenden einer Photonenquelle (108) zum Erzeugen von Photonen, die ein abzubildendes Objekt (104) passieren;
Verwenden eines Photonendetektors (110) zum Aufzeichnen eines Bildes (420) des Objekts (104), wobei das Bild (420) eine einzelne Streuregion (510), die im Wesentlichen nur Streuphotonen ausgesetzt ist, und eine Bildgebungsregion (530), die Primärphotonen und Streuphotonen ausgesetzt ist, umfasst, wobei der Photonendetektor (110) in einer Versatzkonfiguration angeordnet ist und die einzelne Streuregion (220) entlang einer Grenze des Photonendetektors (110) im Schatten des Objekts (104) angeordnet ist;
Korrigieren von mindestens einem Teil des Bildes (420) in Bezug auf niedrigen Frequenzabfall;
Anwenden eines Modells eines Photonenstreuprozesses zum Erlangen eines Schätzwertes (520) der Exposition der einzelnen Streuregion (510) gegenüber Streuphotonen;
Vergleichen der einzelnen Streuregion (510) des Bildes (420) mit dem Schätzwert (520) der Exposition der einzelnen Streuregion (510) gegenüber Streuphotonen;
Modifizieren des Modells basierend zumindest teilweise auf dem Vergleich, um ein aktualisiertes Modell des Photonenstreuprozesses zu erzeugen; und
Anwenden des aktualisierten Modells auf die Bildgebungsregion (530) des Bildes (420), um ein in Bezug auf die Streuung korrigiertes Bild (470) zu erzeugen.

2. Verfahren nach Anspruch 1, wobei eine Verschlussblende (132) verwendet wird, um die einzelne Streuregion (510) von der Bildgebungsregion (530) zu trennen.

3. Verfahren nach Anspruch 1, wobei mindestens die einzelne Streuregion (510) des Bildes (420) korrigiert wird, um den niedrigen Frequenzabfall zu kompensieren.

4. Verfahren nach Anspruch 1, wobei das Verfahren Folgendes umfasst:
Bewegen des Photonendetektors (110) in mehrere Bildgebungspositionen um das Objekt (104) herum, um eine Bildprojektion (420) als das Bild an jeder Bildposition aufzuzeichnen, wobei jede Bildprojektion (420) eine einzelne Streuregion (510), die im Wesentlichen nur Streuphotonen ausgesetzt wird, und eine Bildgebungsregion (530), die Primärphotonen und Streuphotonen ausgesetzt ist, umfasst;
wobei in dem Schritt des Korrigierens mindestens ein Teil jeder Bildprojektion (420) in Bezug auf niedrigen Frequenzabfall korrigiert wird;
wobei in dem Schritt des Anwendens eines Modells das Modell eines Photonenstreuprozesses bei jeder Bildgebungsposition angewendet wird, um einen Schätzwert (520) der Exposition der einzelnen Streuregion (510) gegenüber Streuphotonen zu erlangen;
wobei in dem Schritt des Vergleichens die einzelne Streuregion (510) jeder Bildprojektion (420) mit dem Schätzwert (520) der Exposition der einzelnen Streuregion (510) gegenüber Streuphotonen verglichen wird;
wobei in dem Schritt des Anwendens des aktualisierten Modells das aktualisierte Modell auf die Bildgebungsregion (530) jeder Bildprojektion (420) angewendet wird, um ein in Bezug auf die Streuung korrigiertes Bild (470) zu erzeugen.

5. Verfahren nach Anspruch 4, wobei eine Verschlussblende (132) verwendet wird, um die einzelne Streuregion (510) von der Bildgebungsregion (530) zu trennen, und wobei die Verschlussblende (132) zwischen der Photonenquelle (108) und dem Objekt (104) angeordnet ist.

6. Verfahren nach Anspruch 4, wobei das Modell ein physikalisches Modell ist, das auf Annahmen oder Schätzungen bezüglich des physikalischen Raums basiert, der von den Photonen durchquert wird, bevor sie den Photonendetektor (110) erreichen.

7. Gerät zum Durchführen einer Korrektur bezüglich Photonenstreuung in einem Bild, wobei das Gerät Folgendes umfasst:
eine Photonenquelle (108) zum Erzeugen von Photonen, die ein abzubildendes Objekt (104) passieren;
einen Photonendetektor (110) zum Aufzeichnen eines Bildes (420) des Objekts (104), wobei das Bild (420) eine einzelne Streuregion (510), die im Wesentlichen nur Streuphotonen ausgesetzt ist, und eine Bildgebungsregion (530), die Primärphotonen und Streuphotonen ausgesetzt ist, umfasst, wobei der Photonendetektor (110) in einer Versatzkonfiguration angeordnet ist und die einzelne Streuregion (220) entlang einer Grenze des Photonendetektors (110) im Schatten des Objekts (104) angeordnet ist; und
einen Bildprozessor (124), der
mindestens einen Teil des Bildes (420) in Bezug auf niedrigen Frequenzabfall korrigiert;
ein Modell eines Photonenstreuprozesses anwendet, um einen Schätzwert der Exposition der einzelnen Streuregion gegenüber Streuphotonen zu erlangen;
die einzelne Streuregion (510) des Bildes (420) mit dem Schätzwert der Exposition der einzelnen Streuregion gegenüber Streuphotonen vergleicht;
das Modell basierend zumindest teilweise auf dem Vergleich modifiziert, um ein aktualisiertes Modell des Photonenstreuprozesses zu erzeugen; und
das aktualisierte Modell auf die Bildgebungsregion (530) des Bildes (420) anwendet, um ein in Bezug auf die Streuung korrigiertes Bild (470) zu erzeugen.

8. Gerät nach Anspruch 7, wobei
die Photonenquelle (108) vorgesehen ist, um Photonen zu erzeugen, die ein abzubildendes Objekt (104) in einem Bildgebungsbereich (106) passieren;
der Photonendetektor (110) zwischen mehreren Bildgebungspositionen um den Bildgebungsbereich (106) herum bewegbar ist, um eine Bildprojektion (420) als das Bild an jeder Bildgebungsposition aufzuzeichnen, wobei der Photonendetektor (110) eine einzelne Streuregion (220), die im Wesentlichen nur den Streuphotonen ausgesetzt ist, um ein Streuregionsignal zu erzeugen, welches die einzelne Streuregion des Bildes darstellt, und eine Bildgebungsregion (210), die Primärphotonen und Streuphotonen ausgesetzt ist, um ein Bildgebungsregionsignal zu erzeugen, das die Bildgebungsregion des Bildes darstellt, umfasst; und
wobei der Bildprozessor (124) vorgesehen ist, um
das Streuregionsignal von dem Photonendetektor (110) zu empfangen; mindestens einen Teil des einzelnen Streuregionsignals oder des Bildgebungsregionsignals in Bezug auf niedrigen Frequenzabfall zu korrigieren;
das Modell eines Photonenstreuprozesses anzuwenden, um einen Streuexpositionsschätzwert für die Exposition der Streuregion (220) gegenüber Streuphotonen zu erlangen;
das einzelne Streuregionsignal mit dem Streuexpositionsschätzwert zu vergleichen;
basierend zumindest teilweise auf dem Vergleich ein aktualisiertes Modell des Photonenstreuprozesses zu erzeugen; und
das aktualisierte Modell auf das Bildgebungsregionsignal anzuwenden, um eine in Bezug auf die Streuung korrigierte Bildprojektion zu erzeugen;
wobei das Gerät weiterhin eine Anzeige (128) umfasst, auf der sich ein Benutzer Bilder des Objekts (104) ansehen kann.

9. Gerät nach Anspruch 8, wobei das Modell ein physikalisches Modell ist, das auf Annahmen oder Schätzungen bezüglich des physikalischen Raums basiert, der von den Photonen durchquert wird, bevor sie den Photonendetektor (110) erreichen.

10. Computerlesbares Medium mit einer oder mehreren von einem Computer ausführbaren Anweisungen zum Korrigieren eines Bildes (420) in Bezug auf Photonenstreuung, wobei das computerlesbare Medium Folgendes umfasst:
Logik zum Empfangen eines Bildsignals von einem Photonendetektor (110), wobei das Bildsignal ein Streuregionsignal aus einer einzelnen Streuregion (220) des Photonendetektors (110), die im Wesentlichen nur Streuphotonen ausgesetzt ist, und ein Signal der Bildgebungsregion (210) des Photonendetektors (110), die Primärphotonen und Streuphotonen ausgesetzt ist, umfasst, wobei der Photonendetektor (110) in einer Versatzkonfiguration angeordnet ist und die einzelne Streuregion (220) entlang einer Grenze des Photonendetektors (110) im Schatten des Objekts (104) angeordnet ist;
Logik zum Korrigieren von mindestens einem Teil des Bildsignals in Bezug auf niedrigen Frequenzabfall;
Logik, die ein Modell eines Photonenstreuprozesses anwendet, um einen Schätzwert des Streuregionsignals zu erlangen;
Logik, die das von dem Photonendetektor (110) empfangene Streuregionsignal mit dem Schätzwert des Streuregionsignals vergleicht;
Logik, die das Modell basierend zumindest teilweise auf dem Vergleich modifiziert, um ein aktualisiertes Modell des Photonenstreuprozesses zu erzeugen; und
Logik, die das aktualisierte Modell auf das Bildgebungsregionsignal anwendet, um ein in Bezug auf die Streuung korrigiertes Bild (470) zu erzeugen.

## Revendications

1. Procédé de correction de la diffusion des photons sur une image, le procédé comprenant :
l'utilisation d'une source de photons (108) pour générer des photons qui passent à travers un sujet (104) dont une image doit être prise ;
l'utilisation d'un détecteur de photons (110) pour enregistrer une image (420) du sujet (104), dans laquelle l'image (420) comprend une unique région de diffusion (510) exposée essentiellement seulement aux photons de diffusion et une région d'imagerie (530) exposée aux photons primaires et aux photons de diffusion, dans lequel le détecteur de photons (110) est dans une configuration décalée et l'unique région de diffusion (220) est disposée le long d'un bord du détecteur de photons (110) dans l'ombre du sujet (104) ;
la correction d'au moins une partie de l'image (420) pour la chute aux basses fréquences ;
l'application d'un modèle d'un processus de diffusion de photons pour produire une estimation (520) de l'exposition de l'unique région de diffusion (510) aux photons de diffusion ;
la comparaison de l'unique région de diffusion (510) de l'image (420) à l'estimation (520) de l'exposition de l'unique région de diffusion (510) aux photons de diffusion ;
en se basant au moins en partie sur la comparaison, la modification du modèle pour générer un modèle actualisé du processus de diffusion de photons ; et
l'application du modèle actualisé à la région d'imagerie (530) de l'image (420) pour générer une image corrigée par rapport à la diffusion (470).

2. Procédé selon la revendication 1, dans lequel un obturateur (132) est utilisé pour séparer l'unique région de diffusion (510) de la région d'imagerie (530).

3. Procédé selon la revendication 1, dans lequel au moins l'unique région de diffusion (510) de l'image (420) est corrigée pour compenser la chute aux basses fréquences.

4. Procédé selon la revendication 1, le procédé comprenant :
le déplacement du détecteur de photons (110) à de multiples positions d'imagerie autour du sujet (104) pour enregistrer une projection d'image (420) en tant qu'image à chaque position d'imagerie, dans lequel chaque projection d'image (420) comprend une unique région de diffusion (510) exposée essentiellement seulement aux photons de diffusion et une région d'imagerie (530) exposée aux photons primaires et aux photons de diffusion ;
dans lequel, dans l'étape de correction, au moins une partie de chaque projection d'image (420) est corrigée pour la chute aux basses fréquences ;
dans lequel, dans l'étape d'application du modèle, pour chaque position d'imagerie, le modèle d'un processus de diffusion de photons est appliqué pour produire une estimation (520) de l'exposition de l'unique région de diffusion (510) aux photons de diffusion ;
dans lequel, dans l'étape de comparaison, l'unique région de diffusion (510) de chaque projection d'image (420) est comparée à l'estimation (520) de l'exposition de l'unique région de diffusion (510) aux photons de diffusion ; et
dans lequel, dans l'étape d'application du modèle actualisé, le modèle actualisé est appliqué à la région d'imagerie (530) de chaque projection d'image (420) pour générer une projection d'image corrigée par rapport à la diffusion (470).

5. Procédé selon la revendication 4, dans lequel un obturateur (132) est utilisé pour séparer l'unique région de diffusion (510) de la région d'imagerie (530) et dans lequel l'obturateur (132) est disposé entre la source de photons (108) et le sujet (104).

6. Procédé selon la revendication 4, dans lequel le modèle est un modèle physique basé sur des hypothèses ou des estimations concernant l'espace physique traversé par les photons avant qu'ils atteignent le détecteur de photons (110).

7. Appareil de correction de la diffusion des photons sur une image, l'appareil comprenant :
une source de photons (108) servant à générer des photons qui passent à travers un sujet (104) dont une image doit être prise ;
un détecteur de photons (110) servant à enregistrer une image (420) du sujet (104), dans lequel l'image comprend une unique région de diffusion exposée essentiellement seulement aux photons de diffusion et une région d'imagerie exposée aux photons primaires et aux photons de diffusion, dans lequel le détecteur de photons (110) est dans un configuration décalée et l'unique région de diffusion est disposée le long d'un bord du détecteur de photons (110) dans l'ombre du sujet (104) ; et
un processeur d'image (124) qui :
corrige au moins une partie de l'image (420) pour la chute aux basses fréquences ;
applique un modèle d'un processus de diffusion de photons pour produire une estimation de l'exposition de l'unique région de diffusion aux photons de diffusion ;
compare l'unique région de diffusion de l'image (420) à l'estimation de l'exposition de l'unique région de diffusion aux photons de diffusion ;
en se basant au moins en partie sur la comparaison, modifie le modèle pour générer un modèle actualisé du processus de diffusion de photons ; et
applique le modèle actualisé à la région d'imagerie (530) de l'image (420) pour générer une image corrigée par rapport à la diffusion (470).

8. Appareil selon la revendication 7, dans lequel :
la source de photons (108) est conçue pour générer des photons qui passent à travers un sujet (104) dont une image doit être prise dans une zone d'imagerie (106) ;
le détecteur de photons (110) peut se déplacer entre de multiples positions d'imagerie autour de la zone d'imagerie (106) pour enregistrer une projection d'image (420) en tant qu'image à chaque position d'imagerie, le détecteur de photons (110) comprenant une unique région de diffusion (220) exposée essentiellement seulement aux photons de diffusion pour générer un signal de région de diffusion représentant l'unique région de diffusion de l'image et une région d'imagerie (210) exposée aux photons primaires et aux photons de diffusion pour générer un signal de région d'imagerie représentant la région d'imagerie de l'image ; et
le processeur d'image (124) est conçu pour :
recevoir le signal de région de diffusion provenant du détecteur de photons (110) ;
corriger au moins une partie du signal de l'unique région de diffusion ou du signal de région d'imagerie pour la chute aux basses fréquences ;
utiliser le modèle d'un processus de diffusion de photons pour produire l'estimation d'exposition à la diffusion de l'exposition de la région de diffusion (220) aux photons de diffusion ;
comparer le signal de l'unique région de diffusion à l'estimation d'exposition à la diffusion ;
en se basant au moins en partie sur la comparaison, générer le modèle actualisé du processus de diffusion de photons ; et
appliquer le modèle actualisé au signal de région d'imagerie pour générer une projection d'image corrigée par rapport à la diffusion ;
dans lequel l'appareil comprend en outre un affichage (128) permettant à un utilisateur de visualiser les images du sujet (104).

9. Appareil selon la revendication 8, dans lequel le modèle est un modèle physique basé sur des hypothèses ou des estimations concernant l'espace physique traversé par les photons avant qu'ils atteignent le détecteur de photons (110).

10. Support pouvant être lu par un ordinateur comprenant une ou plusieurs instructions exécutables par un ordinateur pour corriger une image (420) pour la diffusion des photons, le support pouvant être lu par un ordinateur comprenant :
une logique servant à recevoir un signal d'image provenant d'un détecteur de photons (110), dans laquelle le signal d'image comprend un signal de région de diffusion provenant d'une unique région de diffusion (220) du détecteur de photons (110) qui est exposée essentiellement seulement aux photons de diffusion, et un signal de région d'imagerie provenant d'une région d'imagerie (210) du détecteur de photons (110) qui est exposée aux photons primaires et aux photons de diffusion, dans lequel le détecteur de photons (110) est dans une configuration décalée et l'unique région de diffusion (220) est disposée le long d'un bord du détecteur de photons (110) dans l'ombre du sujet (104) ;
une logique servant à corriger au moins une partie du signal d'image pour la chute aux basses fréquences ;
une logique qui applique un modèle d'un processus de diffusion de photons pour produire une estimation du signal de région de diffusion ;
une logique qui compare le signal de région de diffusion reçu à partir du détecteur de photons (110) à l'estimation du signal de région de diffusion ;
une logique qui, en se basant au moins en partie sur la comparaison, modifie le modèle pour générer un modèle actualisé du processus de diffusion de photons ; et
une logique qui applique le modèle actualisé au signal de région d'imagerie pour générer une image corrigée par rapport à la diffusion (470).
